# EUROPEAN PATENT APPLICATION

(11) **EP 1 517 537 A2**
(43) Date of publication of application: **23.03.2005**
(21) Application number: 04104314.2
(22) Date of filing: 08.09.2004
(51) Int. Cl.: H04N 1/40

(54) **PROOF, IMAGE FORMING METHOD AND IMAGE FORMING APPARATUS**

(30) Priority: 18.09.2003 JP 2003325394
(71) Applicant: Konica Minolta Medical & Graphic Inc., Tokyo 163-0512 (JP)
(72) Inventor: SHINOTSUKA, Shin, Konica Minolta Med. & Grap. Inc., 350-1321, Saitama (JP)
(74) Representative: Gille Hrabal Struck Neidlein Prop Roos

(57) **Abstract**

A proof formed with a halftone-dot gradation image having a halftone dot, the halftone dot including a set of pixels, and the proof has pixels disposed along a periphery of the halftone dot boundary, wherein the pixels disposed have a lower density than that of the set of pixels included in the halftone dot.

## Description

### BACKGROUND OF THE INVENTION

This invention relates a proof that carries halftone-dot gradation images for proofreading of printouts and an apparatus for forming halftone-dot gradation images. More particularly, this invention relates to a proof that enables gradation control such as dot-gain control according to binary halftone-dot images that are used for printing and has comparatively low computation load, and an apparatus for forming halftone-dot gradation images for that purpose.

In recent publication, all print-related processes such as preparation of original copies, proofreading, and press-running are done full-digitally. When an original copy is made by a desktop publishing (DTP) system, the raster image processor (RIP) separates the original copy by process colors (yellow Y, magenta M, cyan C, and black K) and binarizes the separation outputs (including halftone processing). Press plates are created directly from these binary halftone-dot images and finally used for printing.

These binary halftone-dot images are used to create a proof also in proofreading before final printing to reproduce the same halftone-dots as those of the printouts. However, a proofer has product-specific output characteristics. So the RIP first makes a preset gradation control for each proofer, creates binary halftone-dot images, and sends them to the proofer. This is very complicated and time-consuming. Although it is possible to make each proofer has its own RIP, the RIPs are comparatively expensive and may have different processing results such as fonts and the like. This is not practical. To solve such a problem, the world wants an image forming apparatus that can control gradation when forming a proof using binary halftone-dot images for printing.

It is well known that publications cannot be free from the effect that occurs when a larger-than-specified dot appears on the final printed piece because of differences in papers and inks. This effect is called dot-gain. Conventionally, binary dot images used for printing are made smaller by the difference between the actual printed dot and the ideal digital dot due to dot gain. Therefore, when the binary dot images are used directly by a proofer, the binary dot images of the resulting proof are smaller by the difference due to dot gain. So also judging from this point of view, the world wants an image forming apparatus that can control gradation when forming a proof using binary halftone-dot images for printing.

A well-known conventional art for controlling gradation by using binary dot images consists of the steps of calculating a dot area ratio of each dot image area, calculating the increment of the dot area ratio equivalent to the dot gain, calculating the number of pixels to be increased for the dots, making the color of the pixels surrounding the dots equivalent to the pixels within the dots, and thus making the dots greater. (For example, see Patent Document 1.) However, as this art increases the dot size by a unit of pixel size, the dot shape may not be equal to the original one. Further, this art needs to make binary-to-multi value conversions, further make multi-to-multi value conversions (gradation control), and control the area ratios of binary dot images. The loads of these operations are very high and increase the production cost of the image forming apparatus. Particularly, when a dot has a small line frequency, the quantity of operation increases to assure the precision of the binary-to-multi value conversion.

Another gradation controlling art controls image densities to adjust ink trapping instead of controlling dot area ratios. (For example, see Patent Document 2.)
Patent Document 1: Japanese Non-examined Patent Publication 2002-290722
Patent Document 2: Japanese Non-examined Patent Publication H7-156362

An object of this invention is to provide an image forming apparatus that ensures to maintain the dot shape with low operational load using a comparatively simple operation that can control gradation when creating a proof from binary dot images for printed materials.

### SUMMARY OF THE INVENTION

The first feature of this invention is a proof formed with a halftone-dot gradation image having a halftone dot, the halftone dot including a set of pixels, and the proof has pixels disposed along a periphery of the halftone dot boundary, wherein the pixels disposed have a lower density than that of the set of pixels included in the halftone dot.

It is preferable that the pixels of lower densities are disposed outside the periphery of the above dot boundary. Further, it is preferable that the densities of the lower-density pixels are corresponding to dot-gain of the printed materials of the proof.

The second feature of this invention is an image forming apparatus for forming a halftone-dot gradation image from a binary dot image for printing a print material, the halftone-dot gradation image having a halftone dot, the halftone dot including a set of pixels, and the image forming apparatus comprising: an identifying section for scanning the binary dot image and identifying a pixel on a dot boundary; and a setting section for setting a density of a pixel included in the halftone-dot gradation image; wherein the setting section distinguishes the identified pixel on a dot boundary, and sets the density of a pixel along a periphery of the dot boundary in the halftone-dot gradation image lower than that of the set of pixels included in the halftone dot of the halftone-dot gradation image.

Further it is preferable to provide a means for setting dot gain or gradation control conditions in printed materials and make the densities of pixels around the boundary vary corresponding to the above conditions.

The third feature of this invention is an image forming method for forming a halftone-dot gradation image from a binary dot image for printing a print material, the halftone-dot gradation image having a halftone dot, the halftone dot including a set of pixels, and the image forming method comprising the steps of: an identifying a pixel on a dot boundary through scanning the binary dot image; and setting a the density of a pixel along a periphery of the dot boundary in the halftone-dot gradation image lower than that of the set of pixels included in the halftone dot of the halftone-dot gradation image.

This invention enables gradation control in formation of a proof by using binary dot images for printed materials without breaking dot shapes in a comparatively simple manner. This reduces the operation load of the apparatus and consequently reduces the production cost of the apparatus. Therefore, the halftone-dot gradation images can be formed with halftone-dots whose shapes are similar to those of halftone-dots formed on printed materials by dot gain. This effect becomes greatest in a medium gray level which is most affected by dot gain. Minus dot gain as well as plus dot gain is available.

### BRIEF DESCRIPTION OF THE DRAWINGS

FIG. 1 lists relationships between solid colors and combinations of colors on printing plates.
FIG. 2 is a pattern diagram showing a magnified view of a gradation-controlled proof image.
FIG. 3(a) and FIG. 3(b) respectively show a schematic example of overprinting of two halftone dots and the overprinting on a proof image.
FIG. 4 shows a schematic example of overprinting of three halftone dots of a proof image.
FIG. 5 shows an outlined functional block diagram of an image forming apparatus.
FIG. 6 shows a control-related functional block diagram of the image forming apparatus.
FIG. 7 is a conceptual diagram showing an example of a print image data table that stores a halftone-dot image.
FIG. 8 is a conceptual diagram showing an example of a pixel type table.
FIG. 9 is a conceptual diagram showing an example of a color collection table.
FIG. 10 is a conceptual diagram showing an example of a proof image data table.
FIG. 11(a), FIG. 11(b), and FIG. 11(c) are respectively conceptual diagrams showing examples of plate characteristics tables.
FIG. 12 is a conceptual diagram showing an example of filtering.
FIG. 13 is a whole operational flow of the image forming apparatus.
FIG. 14 is a detailed operational flow of the S300 step.
FIG. 15 is a detailed operational flow of the S400 step.
FIG. 16 is a pattern diagram showing a magnified view of a proof image which does not undergo the gradation-control.

### DETAILED DESCRIPTION OF THE PREFERRED EMBODIMENT

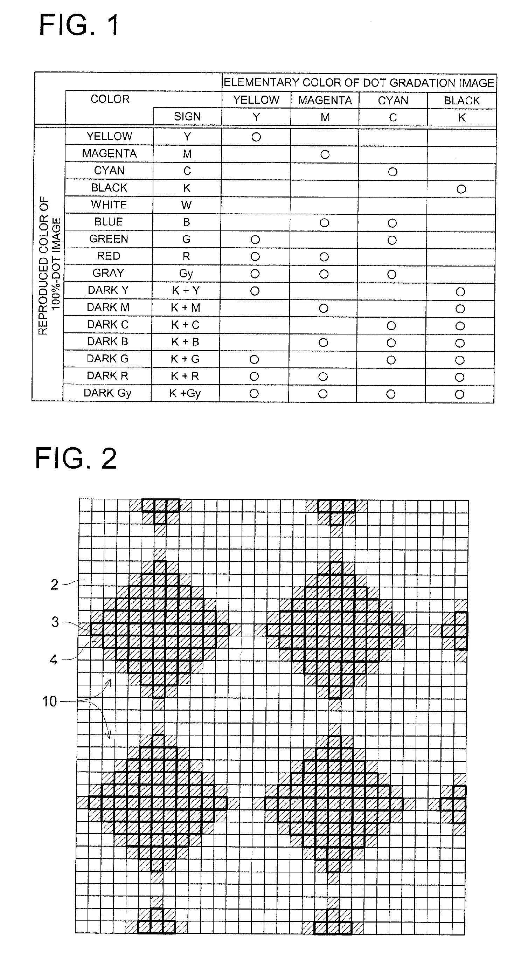

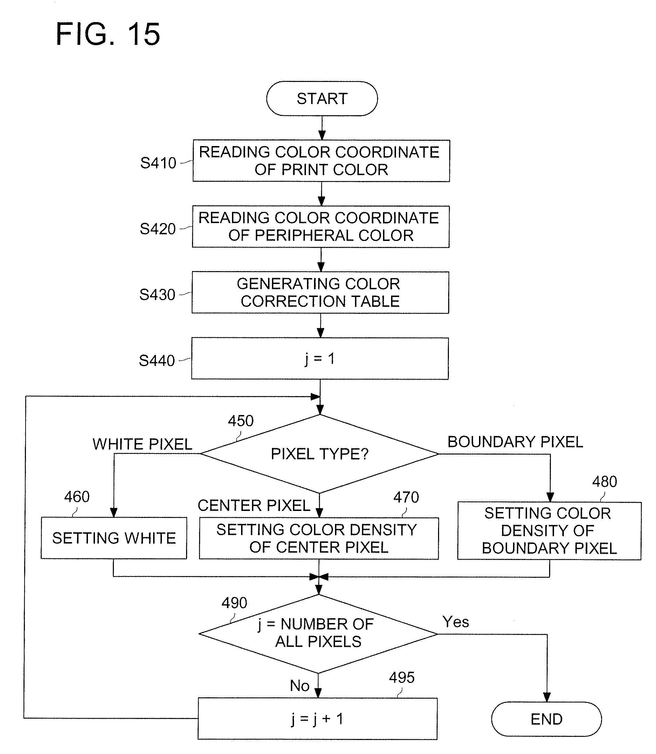

Below will be explained a preferred embodiment of this invention with reference to accompanying drawings. However, it is to be understood that the invention is not intended to be limited to the specific embodiments. FIG. 1 shows process colors Y, M, C, and K are used to make printed materials and solid colors (whose dot area ratio is 100%) are respectively expressed by overprinting process colors indicated by circles on the same line. The symbols of colors or inks in FIG. 1 are used in the description below. When a special color is added to the process colors, 32 colors instead of the above 16 colors are used. Further, when two special colors are added to the process colors, 64 colors are used. The description below assumes 16 colors of FIG. 1 or 15 colors of FIG. 1 without a white color are used.

Further, examples in the description below assume that silver halide color photosensitive materials are used as proofers and colors of the color names in FIG. 1 are expressed by combinations of elementary colors of the photosensitive materials Y, M, and C. It is possible to continuously change densities of the above 15 colors by changing the intensities of exposures of R, G, and B light emitting diodes (LEDs) corresponding to respective elementary colors of the silver halide photosensitive materials in a multiple-step manner. This enables compensation of color differences due to differences in papers and inks (e.g. grades and qualities). Any proofers can be used as long as they can represent various colors, for example, they can represent colors by combinations of dots of different colors. However, photosensitive materials using silver halides are preferable to reproduce dot shapes correctly and increase the proofing ability.

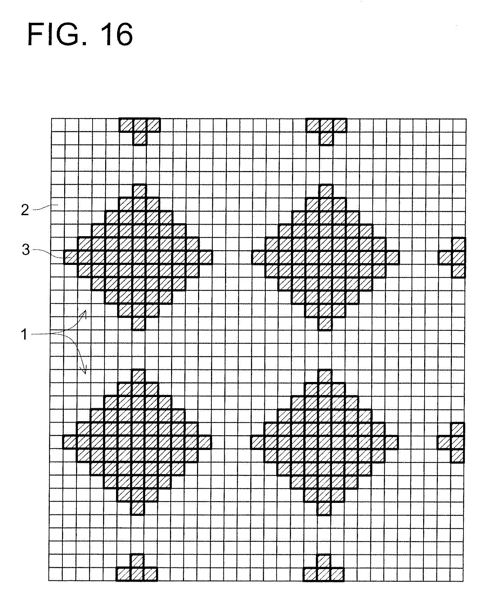

For comparison, FIG. 16 shows a pattern diagram showing a magnified view of a sample image which does not undergo the gradation-control in part 1 of the halftone-dot gradation image. FIG. 16 represents that a halftone-dot 1 made up with a set of colored pixels 3 is placed in the sea of white pixels 2.

FIG. 2 shows a pattern diagram showing a magnified view of the same image part which underwent gradation-control by adjustment of dot gain or dot area ratio. As for a halftone-dot 10 in FIG. 2, the color of each pixel 4, which is in one pixel width outside along the whole dot boundary of the halftone-dot 1 of FIG. 16, is different from the color of pixel 3 in the center of the halftone-dot. To be more precise, the color of pixel 4 is lighter in density than that of pixel 3. In other words, the halftone-dot seems as if it is set in a frame of pixels 4 of lighter color. This frame can be 1 to 5 pixels wide around the halftone-dot (outside the boundary) and preferably 1 to 3 pixels wide. This frame width can be fixed in a single image in advance according to the degree of gradation control. For example, in dot gain control, as the frame width may normally be only 10 to 20% of the dot size, the fame width of 1 or 2 pixels can be set in advance.

Pixels 4 are uniformly provided around the whole periphery of the halftone-dot to enclose the halftone-dot in a frame of a fixed width. So when gradation control is made, the halftone-dot becomes greater in size but remains unchanged in shape. Similarly, as it can be assumed that dot gain in actual print pieces may be comparatively uniform around the periphery of a halftone-dot, which is estimated from a binary dot image, it is assumed that provision of a fixed-width frame of pixels 4 around a halftone-dot is an expression similar to the actual dot shape. "Uniform" here does not always mean "perfect uniform" and can be "almost uniform" by which yon can judge that the dot shape substantially remains unchanged. It can partially contain a missing part. However, "perfect uniform" is preferable. In the description below, we call color-changing pixels of a fixed width around the boundary of a halftone-dot (such as pixels 4) as boundary pixels.

The color of boundary pixels is changed according to the degree of gradation control. Usually, the boundary pixel color is made lighter than the color of the pixels of a halftone-dot excluding the boundary pixels. (Such pixels are sometimes called center pixels.) Substantially, the color is determined by color control on an image whose dot area ratio is about 50% at which the number of boundary pixels becomes greatest.

When boundary pixels of the above determined color are provided around a halftone-dot, no boundary pixel is required for an image whose dot area ratio is 100% or 0%. However, for a gray image whose dot area ratio is about 50% at which the number of boundary pixels becomes greatest, the boundary of the halftone-dot becomes longest and as the result, the number of boundary pixels also becomes greatest. Therefore, the effect of the gradation control by boundary pixels becomes highest. In other words, this can make the gradation control comparatively simple and reduce the operating load of the image forming apparatus.

In the above description, the boundary pixels use only one color. However, it is to be understood that the invention is not intended to be limited to one color. The boundary pixels can use two or more colors. For example, it is possible to prepare first boundary pixels of a color which is lighter (in density) than that of the center pixels and secondary boundary pixels of a color which is much lighter than that of the center pixels and to place the first boundary pixels around the boundary of a halftone-dot and the second boundary pixels around the first boundary pixels.
This increases the operating load of the image forming apparatus but makes the image much closer to the original by actual dot gain. Further, this makes the gradation control range wider.

It is possible to place mixtures of first and second boundary pixels. For example, it is possible to place a first pixel mixture containing the first boundary pixels more than the second boundary pixels just around the boundary of the halftone-dot and another pixel mixture containing the first boundary pixels less than the second boundary pixels around the first pixel mixture.

However, judging from reduction of a load on the apparatus, it is preferable to use at least two kinds but preferably one kind of boundary pixels and place them uniformly and simply.

Similarly, minus dot gain can be expressed. In this case, boundary pixels that are lighter in density than the center pixels are uniformly placed inside the boundary of a halftone-dot. In other words, the color of the center pixels around the boundary is changed to the density of the boundary pixels.

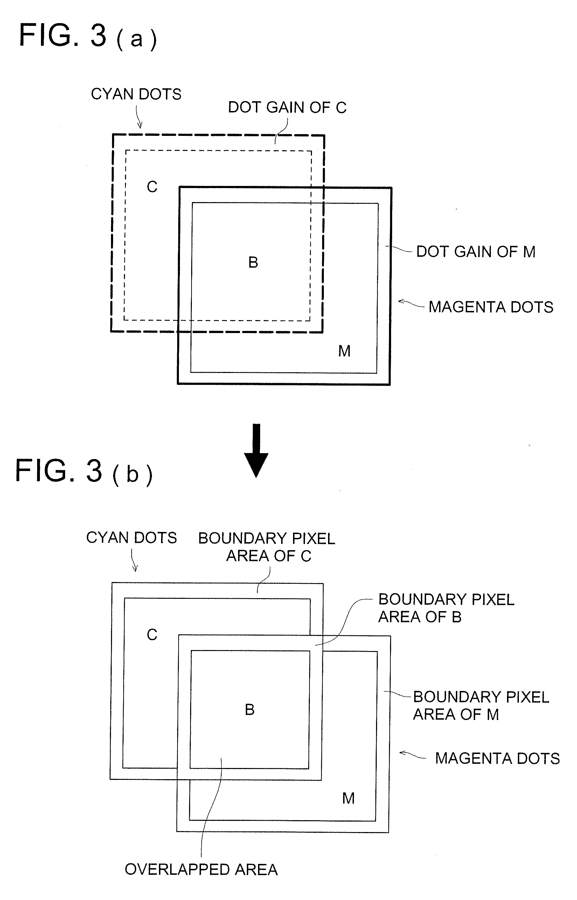

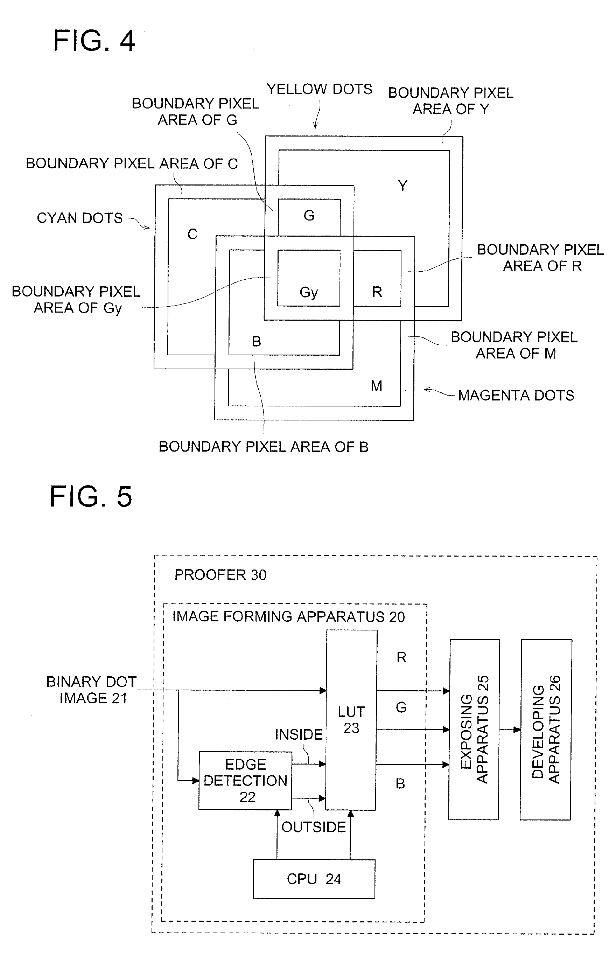

By the way, the halftone-dot image of FIG. 2 is formed by a single plate with an ink of a single color. In ordinary publications, such monochromatic image parts are comparatively few. (Colors expressed by one color are called primary color in the description below.) The most image parts are formed by overprinting inks of different colors. (In the description below, colors such as red R, green G, and blue B made by overprinting two colors are called secondary colors, colors such as gray made by overprinting three colors are called tertiary colors, and so on.) These overprinting are explained with reference to FIG. 3 and FIG. 4 (in which screen angles and so on are ignored).

FIG. 3(a) shows a schematic example of overprinting one square halftone dot (thin solid line) of a magenta plate and one square halftone dot (thin broken line) of a cyan plate on a printed material with part of the halftone dots overlapped each other. The overlapped area of the halftone dots is blue B (a mixture of magenta and cyan). Thick solid and broken lines respectively represent dot gains of the magenta and cyan halftone dots. These halftone dots represented by thick solid and broken lines are given on a printed material.

FIG. 3(b) shows a schematic diagram of a halftone-dot gradation image on a proof image of FIG. 3(a). As explained above, the color of the boundary pixels of the overlapped area is changed as shown in the figure. As the overlapping area of the magenta dot gain and the cyan dot gain on the printed material is blue which is a mixture of cyan ink and magenta ink, the area on the proof image is also blue and its density is lower than that of the center blue pixel.

This is also applicable to areas of a tertiary color made from three or more colors. For example, in FIG. 4(a) which shows a schematic diagram of a halftone-dot gradation image made up with three halftone dots of yellow Y, magenta M, and cyan C on a proof image, the area Gy in which Y, M, and C colors overlap is gray (a tertiary color) and the area Gy is set in a frame of boundary pixels which are lower in density than the center pixels of Gy. This is also applicable to the colors of higher orders. As seen from FIG. 3 and FIG. 4, the color of the area at which frames of colors of different orders overlap preferably uses the color of the higher order.

In short, "halftone-dot" concerning an area gradation image on a proof stated in the first and second features of this invention means an ordinary halftone-dot image corresponding to a halftone dot defined by a single press plate in case of a primary color, but it means image parts corresponding to the overlapping areas of halftone dots in case of colors of higher orders. In other words, when the color of the overlapping area is a secondary color, the "halftone-dot" means an image part corresponding to the overlapping area of two halftone dots. When the color of the overlapping area is a tertiary color, it means image parts corresponding to the overlapping area of three halftone dots. This is also applicable to colors of higher orders and to the description below.

As explained above, it is possible to select only one color relative to the color of the center pixel for the color of the boundary pixels. However, it is possible to select two or more colors according to the characteristics of printed materials. For example, when a pixel is both a center image of magenta M and a boundary pixel of yellow Y, a little yellow Y is added to magenta M as the color of the boundary pixel. Contrarily, when a pixel is both a center image of yellow Y and a boundary pixel of magenta M, a little magenta M is added to yellow Y as the color of the boundary pixel. Further, it is possible that, when a pixel is both a center image of magenta M and a boundary pixel of yellow Y, magenta M is used as the color of the boundary pixel. Contrarily, when a pixel is both a center image of yellow Y and a boundary pixel of magenta M, yellow Y is used as the color of the boundary pixel.

Referring to FIG. 5, below will be briefly explained a proofer that can create a proof image from binary dot images for printed materials according to such an area gradation image. The binary dot image 21 output by the RIP to print is sent to the image forming apparatus 20. The image forming apparatus 20 detects dot boundary pixels (edge detection 22), classifies them according to whether they are inside a halftone-dot (for minus dot gain) or outside a halftone-dot (for plus dot gain), and send the data to a lookup table 23 that consists of a plurality of tables and performs preset data conversions. The binary dot image 21 is also sent to the lookup table 23, combined with data of boundary pixels, converted into exposure signals for R, G, and B light-emitting diodes (LEDs), and sent to the exposing apparatus 25 from the image forming apparatus 20. The exposed photosensitive materials are sent to the developing apparatus 26, and developed there. With this, a proof is completed.
By the way, the proofer consists of the image forming apparatus 20, the exposing apparatus 25, and the developing apparatus 26.

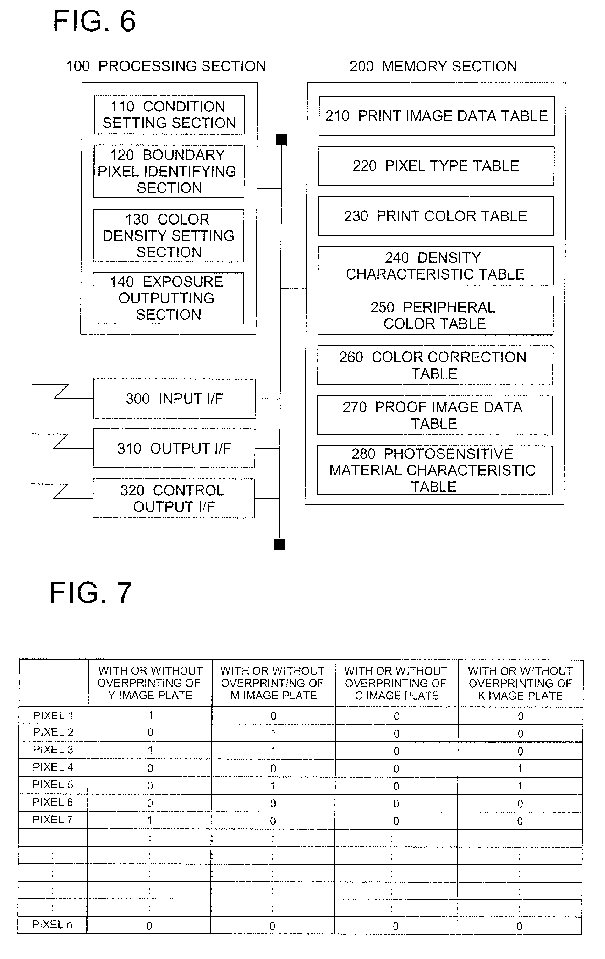

The image forming apparatus will be explained in detail below. FIG. 6 shows a control-related functional block diagram of the image forming apparatus. Let's start with the memory section 200. The memory section 200 stores a print image data table 210, pixel type table 220, a print color table 230, a density characteristic table 240, a peripheral color table 250, a color collection table 260, a proof image data table 280, a photosensitive material characteristic table 290, and screen information required to control the apparatus.

The print image data table 210 stores data of binary dot images of printed materials as shown in FIG. 7. The print image data is provided to output printing plates of process colors and special colors used for printing directly from there. The pixel colors are respectively expressed by combinations of print inks used for printing. The table of FIG. 7 has names of pixels of a digital image in the leftmost column and names of print inks on the top line. In details, this table assumes that the digital image is divided into "n" pieces of pixels and describes whether each pixel requires overprinting of process colors and special colors ("1" requiring overprinting of a color and "0" requiring no overprinting of a color in each bit plane of Y, M, C, and K). Although FIG. 7 shows an example of using process colors only, the table can be formed in the similar way using process colors and special colors.

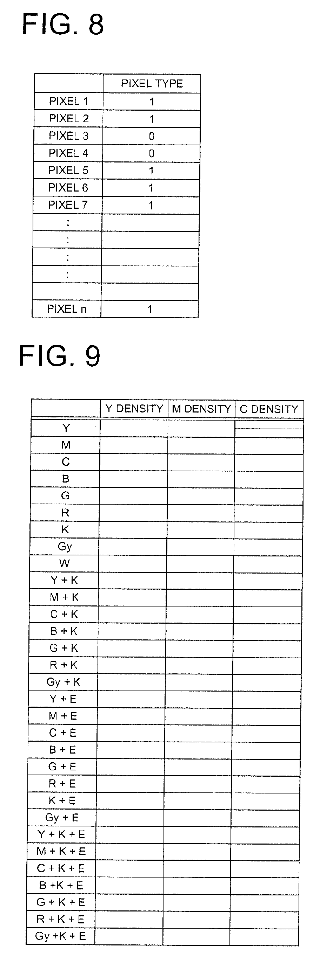

The pixel type table 220 lists type codes (center pixel, boundary pixel, and white pixel) of all pixels of a binary dot image. This table is created by processing of boundary pixel identifying section 120, after scanning each bit plane of the binary dot image for boundary pixels using a filter (to be explained later) to identify whether the boundary pixels are inside or outside of a halftone-dot. FIG. 8 shows an example of this table. When a pixel is a boundary pixel on a bit plane, a boundary pixel code is set for the pixel in the pixel type table 220. When a pixel is a center pixel on a bit plane, a center pixel code is set for the pixel in the pixel type table 220 as far as it is not a boundary pixel. When a pixel is a white pixel in every bit plane, a white pixel code is set for the pixel in the pixel type table 220. In this way, each boundary pixel is identified and distinguished from center and white pixels, and its code is set in the pixel type table 220. This enables easy color change of boundary pixels even in the overlapped area of halftone-dots.

The print color table 230 stores a print profile, that is, color space coordinates of colors represented by 100% solid dots for printing conditions such as paper kinds and ink types corresponding to the fact that colors on the target printed material shown in Fig. 1 varies under such conditions. This table stores data of L*, a*, b* coordinate values using the CIELAB color space as the color space. The CIELAB color space conforms to CIE 1976 (L*a*b* color space) and the calculation of the coordinates conforms to JIS Z 8729-1994. Incidentally, the color space of printed materials need not be the CIELAB color space. It can be the CIELUV space (CIE 1976 L*u*v* color space) or the XYZ color space.

The density characteristic table 240 stores a device profile used to identify a combination of color densities of Y, M, and C that are elementary colors of silver halide photosensitive materials. This table is required to reproduce 15 colors of printed materials on a proof. This table stores data obtained by combining Y, M, and C colors with various color densities under multi-step conditions, measuring L*, a*, and b* of resulting color patches and Y, M, and C densities of status T, and combining them. When the colors of a target print piece do not conform to the printing conditions stored in the density characteristic table 240, the required exposing condition is identified after adequate compensation.

The peripheral color table 250 stores color space coordinates of boundary pixel colors (or called peripheral colors below) preset for each printing condition in the print color table 230 and for each gradation control such as dot gain control. The peripheral colors are lighter than the colors of center pixels. The peripheral colors can be determined by color control on an image whose dot area ratio is about 50% at which the number of boundary pixels becomes greatest. The peripheral colors can be set in sequence in the order of primary, secondary, tertiary, and quartic colors. In this way, as peripheral color data corresponding to conditions such as degrees of dot gain control is stored in advance, the processing load of the apparatus becomes smaller.

The color collection table 260 is created each time a proof image is created for a printed material under a different printing condition. This table stores densities of respective elementary colors of center pixels and those of the peripheral pixels for each color required under printing conditions. FIG. 9 shows an example of the color collection data table. The major symbols in this table are the same as those in Fig. 1, but "Y + E," for example, means a peripheral pixel color when the color of the center pixel of a halftone dot or image part is "Y."

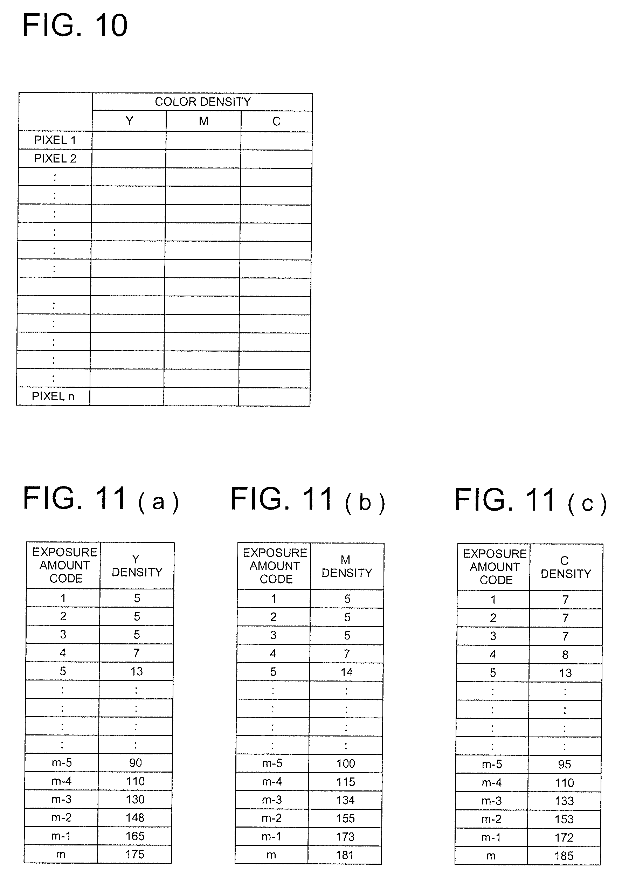

The proof image data table 270 stores data of a halftone-dot gradation image on a proof. FIG. 10 shows an example of this table. In detail, this table stores color density data of elementary colors of respective pixels of a dot area image that is set by the color condition setting apparatus 130.

The photosensitive material characteristic table 280 lists relationships between exposure amount codes that specify the amounts of exposure applied to silver halide materials and densities of respective elementary colors generated by the exposure. Each of FIGs. 11(a), (b), and (c) shows an example of this table.

Below will be explained the processing section 100. This section 100 comprises a condition setting section 110, a boundary pixel identifying section 120, a color density setting section 130, and an exposure outputting section 140.

The condition setting section 110 reads information concerning a printing condition (such as paper type and print ink for printed materials) that is attached to the header section of print image data of a target publication and stores it at a preset address of the memory section. If the print image data does not contain such information, the condition setting section 110 reads screen information to prompt the operator to enter a printing condition from the memory section 200 and displays it on the monitor screen of the image forming apparatus. Further, data of gradation adjustment such as dot gain adjustment is inputted here. This section 110 also receives required data from input devices such as a mouse and a keyboard and stores it at a preset address of the memory section 200.

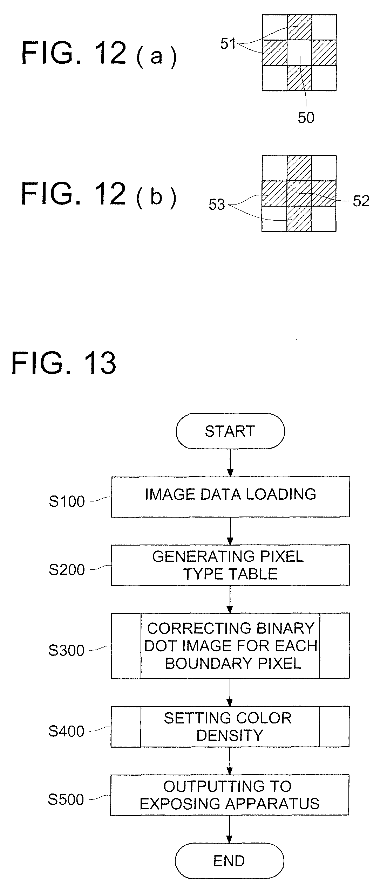

The boundary pixel identifying section 120 first identifies a center pixel on each bit plane (Y, M, C, or K) and stores its code in the pixel type table 220. Then, using a filter that satisfies the content of control such as dot gain that is entered from the condition setting section 110, the boundary pixel identifying section 120 scans the binary dot images on each bit plane (Y, M, C, or K) in a non-interlaced manner, identifies boundary pixels, overwrites the codes of the data on codes of the relevant pixels, and stores them in the pixel type table 220. For example, when with plus dot gain only one pixel outside the boundary of a halftone-dot is used as a boundary pixel, a filter of FIG. 12(a) is used. When the center pixel 50 of the filter is white and when any of peripheral pixels 51 at four adjoining positions is a center pixel of the halftone dot, the center pixel 50 is judged to be a boundary pixel. Here, eight adjoining positions can be used instead of the four adjoining positions. It is possible to use a 5 x 5 filter instead of the 3 x 3 filter (see FIG. 12(a)) to make the boundary two pixels wide. When dot gain is minus, a filter of FIG. 12(b) is used. When the center pixel 52 of the filter is a center pixel, this section judges in the way similar to FIG. 12 (a) and uses one pixel within the boundary of the halftone dot as the boundary pixel. Filter types and conditions are preset according provision of boundary pixels.

As boundary pixels are identified in this way, if a target pixel is a boundary pixel on one of the bit planes, the code of the boundary pixel is stored in the pixel type table 220. If a target pixel is a center pixel of a halftone dot on one of the bit planes, the code of the center pixel is stored in the pixel type table 220 unless it is a boundary pixel. If the pixel is a white pixel on every bit plane, the white code is set in the table 220.

The color condition setting apparatus 130 searches the print color table 230 by print condition information read from the condition setting section 110 and reads coordinates of a color space of a 15-color 100% dot to be used for a target publication. Further, the color condition setting apparatus 130 searches a peripheral color table 250 and reads color space coordinates of preset boundary pixels corresponding to color space coordinates of 15 colors that are read before. Then the color condition setting apparatus 130 relates the color densities of elementary colors of each color (15 colors + 15 colors) to respective colors (15 colors + 15 colors) and stores the result in the color collection table 260.

Further, using the pixel type table 220, the print image data table 210, and referring the color collection table 240, the apparatus 130 relates color densities of elementary colors on a proof image to respective pixels in the print image data. The color condition setting apparatus 130 repeats this to relate color densities to every pixel and stores the result in the proof image data table 270.

The exposure outputting section 140 converts data of the proof image data table 270 of a proof image into exposure amount code by means of the photosensitive material characteristic table 280, and sends the result to the exposing apparatus. The exposing apparatus calculates currents to drive B, G, and R light-emitting diodes (LEDs) from the data by means of a preset table, drives the LEDs to scan the silver halide photosensitive materials in main and subsidiary directions, and scans respective pixels.

The outline of the whole operation of the image forming apparatus will be explained below referring to FIG. 13. The condition setting section 110 fetches in a binary dot image into the print image data table 210 (Step S200). In fetching in, the condition setting section 110 can get data from recoding media such as CD-ROM disks, LAN, WAN, and Internet. It is also possible to measure a target printed material or color patches of the target printed material by spectrophotometry and get a binary dot image. The condition setting section 110 also fetches in print condition data and dot-gain control conditions.

Then, the boundary pixel identifying section 120 scans the binary dot image on each bit plane, specifies center and boundary pixels of halftone dots, and stores the codes in the pixel type table. (Step S200)

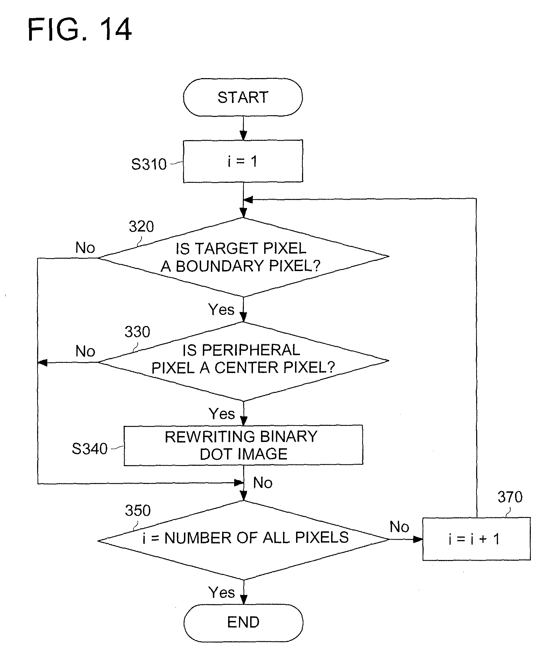

Next, data of the binary dot image is corrected for each identified boundary pixel. (Step S300) This step will be explained in detail referring to FIG. 14 assuming that dot gain is plus for ease of explanation. The image forming apparatus selects a target pixel (Step S310), searches the pixel type table 220 and judges whether the target pixel boundary pixel is a boundary pixel (Step S320). When the target pixel is a boundary pixel, the image forming apparatus searches the bit plane of pixels around the target pixel longitudinally (at the lower step) and judges whether the peripheral pixels contain a center pixel of the halftone dot (at Step S330). When the peripheral pixels contain a center pixel, control flow advances downward from the S330 step. Respective Y, M, C, and K bit data of the target pixel of the binary dot image are logically summed with Y, M, C, and K bit data of the center pixel in the peripheral pixels and overwritten. When the peripheral pixels contain two or more center pixels, the bit data of the center pixels are logically summed with data of the target pixel and overwritten (Step S340). Then control flow is transferred to Step S350.

When the conditions are not satisfied at Steps S320 and S330, control flow is transferred leftward from the step toward Step S350. Step S350 checks whether all pixels are processed or not. If any pixels are left unprocessed, steps S320 to S370 are repeated. When all pixels are processed, the processing of Step S300 ends.

In this way, when a target pixel is a boundary pixel and when pixels'around the target pixel contains a center pixel, bit data of the center pixel of the halftone dot is fetched into the target pixel. Therefore, it is possible to reflect the effect of plus dot gain on the binary dot image. When the dot gain is minus, by the similar processing described above, the effect of dot gain can be reflected.

Then, at Step S400 of FIG. 13, the color density setting section 130 sets densities of each pixel, that is, determines which pixel is printed with what color. The detailed operation flow of this step is shown in FIG. 15.
The color density setting section 130 reads color space coordinates of colors represented by 100% solid dots from the print color table 230 for all of 15 print colors to be specified from a paper type and an ink type that are entered separately (Step S410). These values are used as color space coordinates of the center pixel. Then the color density setting section 130 searches the peripheral color table 250 and reads color space coordinates of 15 colors of the boundary pixel corresponding to the color space coordinates of respective center pixels and for gradation control such as dot gain control (Step S420). From the color space coordinates of the center pixel and boundary pixels, the color density setting section 130 calculates Y, M, and C densities of the center and boundary pixels in reference to the density characteristic table 240, stores data by 15 colors of the center pixels and 15 colors of the boundary pixels in the table to form a color collection table 260 (Step S430).

Using this color collection table, the section 130 determines the densities of elementary colors of each element of the print image data by judging whether the first pixel is a boundary, center, or white pixel from the pixel type table 220 (Step S450), branching downward from Step S450 according to the pixel type, setting densities of elementary colors of the target pixel in reference to the print image data table 210 and the color collection table 260 (any of Steps S460 to S480), repeating the steps S450 to S490 until the densities of all pixels are set, branching rightward from Step S490 when all densities are set, and thus ending the operation flow. The obtained proof image data is stored in the proof image data table 270.

Then the section 130 returns to Step S400 and outputs the obtained proof image data to the exposing apparatus (Step S500). With this, the image forming apparatus ends its operation. Then the exposing apparatus exposes the silver halide photosensitive materials according to data sent from the image forming apparatus. When the exposure ends, the exposed photosensitive materials are sent to the developing apparatus and developed and fixed there. With this, a proof is complete.

By the way, the image forming apparatus is provided on a personal computer. Its control output is connected to the exposing apparatus. The developing apparatus is connected to this exposing apparatus. The proofer is made up with these units. The memory section 200 of the image forming apparatus is provided on a hard disk (HD). The hard disk stores programs and data that are required by the central processing unit (CPU). The programs and data are read and stored in RAM when needed. The processor 100 is configured in this way. Further, the personal computer is equipped with input devices such as a mouse and a keyboard and a monitor display to display the processing status.

Furthermore, the functions of the image forming apparatus can be expressed by programs to be executed by the computer and by recording media in which the program is recorded that can be read by the computer. The programs can be divided arbitrarily and stored separately in recording media. The recording media stated here mean portable media such as flexible disk, magnetic optical disks, ROM, and CD-ROM disks and recording units such as a hard disk to be built in a computer system.

## Claims

1. A proof formed with a halftone-dot gradation image having a halftone dot, the halftone dot including a set of pixels, and the proof comprising:
pixels disposed along a periphery of the halftone dot boundary, wherein the pixels disposed have a lower density than that of the set of pixels included in the halftone dot.

2. The proof of claim 1, wherein the pixels having the lower density are disposed outside the periphery of the halftone dot boundary.

3. The proof of claim 1 or 2, wherein the lower density of the pixels disposed corresponds to a dot-gain in a target print material of the proof.

4. The proof of any one of claims 1 to 3, wherein the proof is formed by using a silver halide photosensitive material.

5. An image forming apparatus for forming a halftone-dot gradation image from a binary dot image for printing a print material, the halftone-dot gradation image having a halftone dot, the halftone dot including a set of pixels, and the image forming apparatus comprising:
an identifying section for scanning the binary dot image and identifying a pixel on a dot boundary; and
a setting section for setting a density of a pixel included in the halftone-dot gradation image; wherein the setting section distinguishes the identified pixel on a dot boundary, and sets the density of a pixel along a periphery of the dot boundary in the halftone-dot gradation image lower than that of the set of pixels included in the halftone dot of the halftone-dot gradation image.

6. The image forming apparatus of claim 5, further comprising a condition setting section for setting a condition of dot-gain or gradation adjustment for a target print material, wherein the density of a pixel along the periphery of the dot boundary varies according to the condition.

7. The image forming apparatus of claim 5 or 6, wherein the halftone-dot gradation image is formed by using a silver halide photosensitive material.

8. An image forming method for forming a halftone-dot gradation image from a binary dot image for printing a print material, the halftone-dot gradation image having a halftone dot, the halftone dot including a set of pixels, and the image forming method comprising the steps of:
an identifying a pixel on a dot boundary through scanning the binary dot image; and
setting a the density of a pixel along a periphery of the dot boundary in the halftone-dot gradation image lower than that of the set of pixels included in the halftone dot of the halftone-dot gradation image.

9. The image forming method of claim 8, further comprising the step of setting a condition of dot-gain or gradation adjustment for a target print material, wherein the density of a pixel along the periphery of the dot boundary varies according to the condition.

10. The image forming method of claim 8 or 9, wherein the halftone-dot gradation image is formed by using a silver halide photosensitive material.
